# EUROPEAN PATENT SPECIFICATION

(11) **EP 3 095 363 B1**
(45) Date of publication and mention of the grant of the patent: **03.07.2019**
(21) Application number: 16169152.2
(22) Date of filing: 11.05.2016
(51) Int. Cl.: A47J 43/07, A47J 19/06

(54) **JUICER AND JUICER ATTACHMENT**
ENTSAFTER UND ENTSAFTERBEFESTIGUNG
CENTRIFUGEUSE ET FIXATION

(30) Priority: 21.05.2015 JP 2015103418
(43) Date of publication of application: 23.11.2016
(73) Proprietor: Panasonic Intellectual Property Management Co., Ltd., Osaka-shi, Osaka 540-6207 (JP)
(72) Inventor: HIROTA, Yukiko, Chuo-ku, Osaka 540-6207 (JP); YAMAGUCHI, Naoki, Chuo-ku, Osaka 540-6207 (JP)
(74) Representative: Grünecker Patent- und Rechtsanwälte PartG mbB

(56) References cited:
- WO-A2-2011/025227
- KR-A- 20130 032 884
- US-A1- 2013 081 547

## Description

### BACKGROUND OF THE INVENTION

### 1. Field of the Invention

The present disclosure relates to a juicer for making juice by crushing foodstuffs (e.g. vegetables, fruits, and cereals); more specifically, it relates to a juicer attachment for crushing frozen foodstuffs.

### 2. Description of the Related Art

A conventional juicer has a case, an attachment, a screw, and a main body.

The attachment, which is disposed in the case, has a mesh section through which juice is filtered. The screw is disposed inside the attachment. The main body, with the case mounted thereon, drives the screw with rotation.

When foodstuffs such as fruits are put into the juicer, they are crushed between the outer surface of the rotating screw and the inner periphery surface of the attachment, and the juice passes through the mesh section of the attachment and comes out of a discharge port of the case (for example, see Japanese Unexamined Patent Application Publication No. 2011-527229).

In recent years, manufacturers put a new type of juicer on the market. Having an attachment with a screw, the juicer crushes frozen food (frozen fruits, for example) with the screw, providing a dessert of sherbet or ice cream.

Such a dessert made of the crushed frozen food, which is called 'Yonanas' (as a registered mark), receives attention as a new type of sweets with low calorie content.

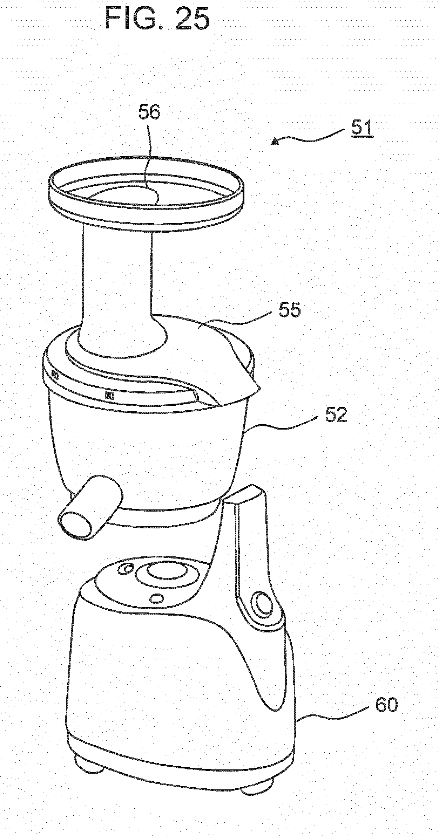

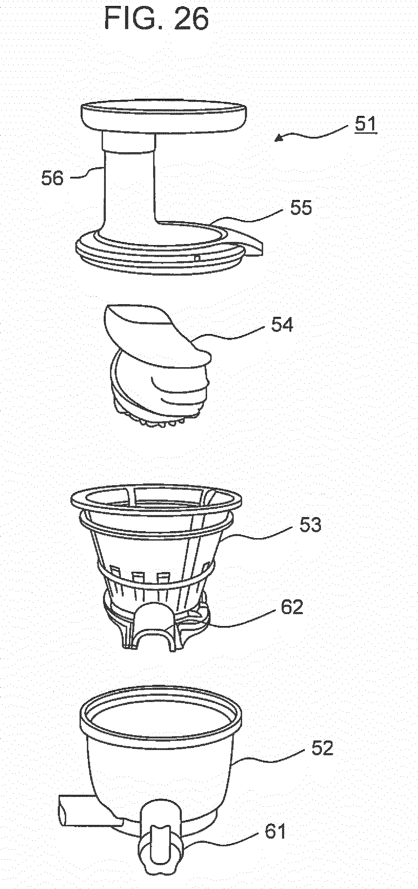

The structure of the conventional juicer with the aforementioned attachment will be described below with reference to FIG. 25 and FIG. 26. FIG. 25 is a perspective external view of a conventional juicer. FIG. 26 is an exploded perspective view of the case and the other components of the juicer.

As shown in FIG. 26, juicer 51 has case 52, attachment 53 disposed in case 52, screw 54 disposed inside attachment 53, and lid 55 attached on case 52.

Lid 55 has inlet 56 through which the frozen food is fed. Case 52 has first discharge port 61 from which fluidized food comes out. Similarly, attachment 53 has second discharge port 62 from which fluidized food comes out.

As shown in FIG. 25, the components described above are mounted, together with case 52, on main body 60. With the aforementioned components set in place, the driver section (not shown) in main body 60 drives screw 54 with rotation.

The frozen food fed through inlet 56 is crushed between the outer surface of rotating screw 54 and the inner periphery surface of attachment 53 and changed into a fluidized state. Such obtained fluidized food is led, via second discharge port 62 of attachment 53, to first discharge port 61 of case 52 and discharged from first discharge port 61.

In juicer 51, a safety rib (not shown) is disposed in first discharge port 61 of case 52 as safety measures for preventing finger insertion accidents. The safety rib separates the flow path in first discharge port 61 into, for example, two or three paths.

### SUMMARY

The juicer having the aforementioned structure can cut or crush frozen fruits or vegetables, but such processed food lacks variety in texture.

To address the problem above, the present disclosure provides an improved juicer attachment and a juicer having the attachment. The juicer attachment and the juicer using the attachment cut and crush frozen fruits and vegetables so that the processed food has different textures.

To achieve the purpose, the juicer attachment and the juicer using the attachment have the structure below.

The juicer of the first exemplary embodiment of the present disclosure has the following components: a screw to be driven with rotation; an attachment, with the screw disposed therein, for crushing frozen food between the inner periphery surface of the attachment and the screw; a case that has a first discharge port for discharging crushed food in a fluidized state; a lid that has an inlet and is attached on the case; and a main body that has a case-mount section on its upper side and drives the screw with rotation.

The attachment contains a drum section and a second discharge port. The drum section crushes the frozen food between its inner periphery surface and the screw. The second discharge port is connected to the inlet of the first discharge port of the case so as to lead the crushed and fluidized food to the first discharge port. The second discharge port has a discharge path in which a part at least between the inlet and the outlet has a cross-section area different from those of other parts.

When the frozen food in a fluidized state passes through the second discharge port, the structure of the embodiment changes the flow of the food, providing the fluidized food with variety of textures.

The juicer of the second exemplary embodiment of the present disclosure, in addition to the structure of the first exemplary embodiment, has the following feature. The outlet of the discharge path has a cross-section area smaller than a cross section area of the inlet of the discharge path. The structure of the embodiment provides the fluidized frozen food passing through the second discharge port with increased flow resistance, by which the food is compressed or kneaded. As a result, the fluidized desert made of the frozen food offers a variety of textures.

The juicer of the third exemplary embodiment of the present disclosure, in addition to the structure of the first exemplary embodiment, has the following feature. The discharge path of the attachment has a part whose cross-section area is smaller than a cross-section area of each of the inlet and the outlet of the discharge path. The structure of the embodiment provides the fluidized frozen food passing through the second discharge port with increased flow resistance, by which the food is compressed or kneaded. As a result, the fluidized desert made of the frozen food offers a variety of textures.

The juicer of the fourth exemplary embodiment, in addition to the structure of any one of the first through the third exemplary embodiments, has the following feature. The attachment has a removable discharge path. According to the structure of the embodiment, passage members of different shapes can be attached to a single attachment. This allows the user to differently control the textures of the fluidized frozen food according to desired taste.

The juicer of the fifth exemplary embodiment, in addition to the structure of any one of the first through the third exemplary embodiments, has the following feature. A part of the discharge path of the attachment has a removable closer. According to the structure of the embodiment, closers of different shapes can be attached to a single attachment. This allows the user to differently control the textures of the fluidized frozen food according to desired taste.

The juicer of the sixth exemplary embodiment, in addition to the structure of the fifth exemplary embodiment, has the following feature. The closer is rotatably attached to the discharge path so as to change the cross-section area of the discharge path. According to the structure of the embodiment, the user enjoys different textures of food with a single closer.

According to the juicer attachment of the seventh exemplary embodiment of the present disclosure, a screw to be driven rotatably disposed inside the attachment. With the structure above, the frozen food is crushed between the screw and the inner periphery surface of the attachment.

The attachment is used for a juicer that has the following components: a case that has a first discharge port for discharging crushed and fluidized food; a lid that has an inlet and is mounted on the case; and a main body that has a case-mount section on its upper side and drives the screw with rotation.

The attachment contains a drum section and a second discharge port. The drum section crushes the frozen food between its inner periphery surface and the screw. The second discharge port is connected to the inlet of the first discharge port of the case so as to lead the crushed and fluidized food to the first discharge port. The second discharge port has a discharge path in which a part at least between the inlet and the outlet has a cross-section area different from those of other parts.

When the fluidized frozen food passes through the second discharge port, the structure of the embodiment changes the flow of the food, providing the fluidized food with variety of textures.

### BRIEF DESCRIPTION OF DRAWINGS

FIG. 1 is a perspective view showing the appearance of a juicer in accordance with a first exemplary embodiment of the present disclosure;
FIG. 2 is an exploded perspective view of the juicer in accordance with the first exemplary embodiment;
FIG. 3 is an exploded perspective view showing a case and the structure inside the case of the juicer in accordance with the first exemplary embodiment;
FIG. 4 is a perspective view showing the appearance of an attachment for processing the frozen food in accordance with the first exemplary embodiment;
FIG. 5 is an exploded perspective view showing the relation of the attachment for processing the frozen food, the case, and a screw in accordance with the first exemplary embodiment;
FIG. 6 is a vertical section view of the case, with the attachment for the frozen food mounted, in accordance with the first exemplary embodiment;
FIG. 7 is a vertical section view of the case, with the attachment for the frozen food mounted, in accordance with the first exemplary embodiment;
FIG. 8 is a perspective view showing the appearance of an attachment for processing the frozen food in accordance with a second exemplary embodiment of the present disclosure;
FIG. 9 is a horizontal section view of the attachment for the frozen food in accordance with the second exemplary embodiment;
FIG. 10 is a perspective view showing the appearance of an attachment for processing the frozen food in accordance with a third exemplary embodiment;
FIG. 11 is a horizontal section view of the attachment for the frozen food in accordance with the third exemplary embodiment;
FIG. 12A is a perspective view showing the appearance of an attachment for processing the frozen food in accordance with a fourth exemplary embodiment of the present disclosure;
FIG. 12B is an exploded perspective view of the attachment for the frozen food in accordance with the fourth exemplary embodiment;
FIG. 13 is a horizontal section view of the attachment for the frozen food and a passage member in accordance with the fourth exemplary embodiment;
FIG. 14 is a horizontal section view of the attachment for the frozen food and a passage member in accordance with the fourth exemplary embodiment;
FIG. 15 is a horizontal section view of the attachment for the frozen food and a passage member in accordance with the fourth exemplary embodiment;
FIG. 16 is a vertical section view of the case, with the attachment for the frozen food mounted, in accordance with the fourth exemplary embodiment;
FIG. 17A is a perspective view showing the appearance of an attachment for processing the frozen food in accordance with a fifth exemplary embodiment of the present disclosure;
FIG. 17B is an exploded perspective view of the attachment for the frozen food in accordance with the fifth exemplary embodiment;
FIG. 18 is a horizontal section view of the attachment for the frozen food in accordance with the fifth exemplary embodiment;
FIG. 19A is a perspective view of an attachment for processing the frozen food in accordance with a sixth exemplary embodiment of the present disclosure;
FIG. 19B is an exploded perspective view of the attachment for the frozen food in accordance with the sixth exemplary embodiment;
FIG. 20 is a horizontal section view of the attachment for the frozen food in accordance with the sixth exemplary embodiment;
FIG. 21 is a perspective view showing the appearance of an attachment for processing the frozen food in accordance with a seventh exemplary embodiment of the present disclosure;
FIG. 22A is a horizontal section view of the attachment for the frozen food in accordance with the seventh exemplary embodiment;
FIG. 22B is an enlarged section view of the attachment for the frozen food in accordance with the seventh exemplary embodiment;
FIG. 23 is a perspective view of the attachment with a fan has been rotated;
FIG. 24 is a perspective view of the attachment with a fan has been further rotated;
FIG. 25 is a perspective view showing the appearance of a conventional juicer; and
FIG. 26 is an exploded perspective view of a conventional juicer.

### DETAILED DESCRIPTION

### FIRST EXEMPLARY EMBODIMENT

Hereinafter, the structure of the first exemplary embodiment will be described with reference to accompanying drawings. In the drawings below, like parts have similar reference marks and overlapping descriptions may be omitted.

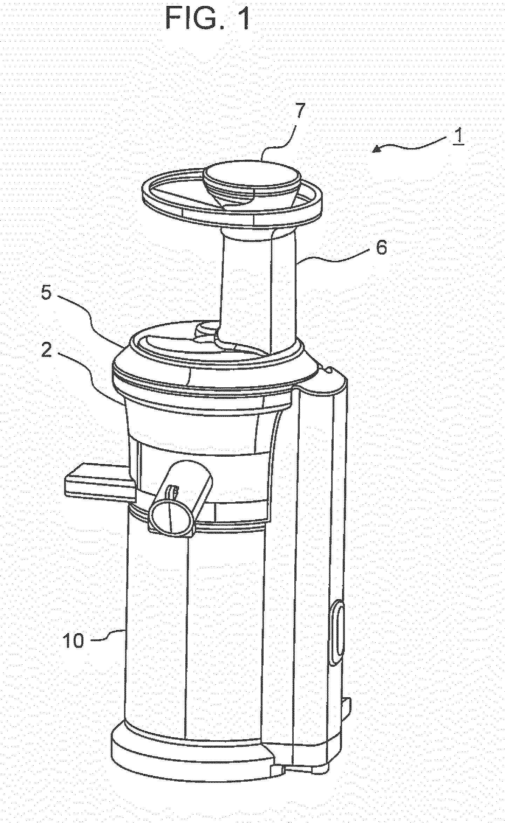

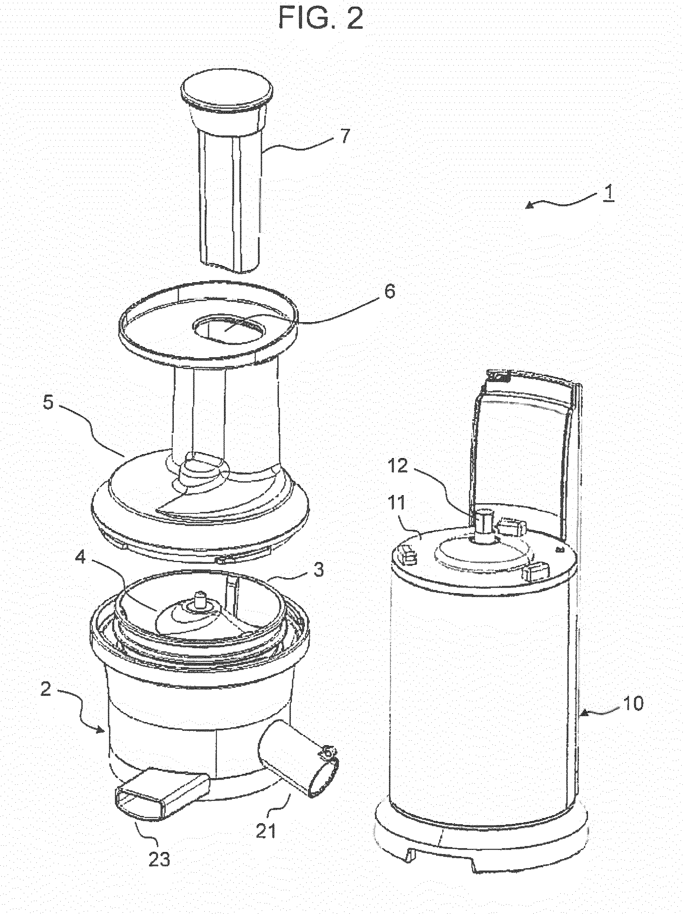

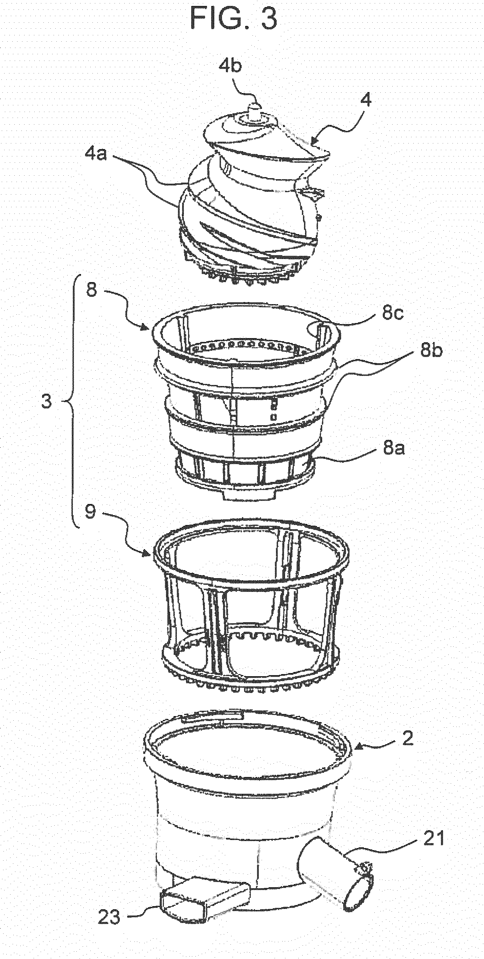

FIG. 1 is a perspective view showing the appearance of juicer 1 of the embodiment. FIG. 2 and FIG. 3 are exploded perspective views of juicer 1 of the embodiment. Specifically, FIG. 3 is an exploded perspective view of the case and its inner structure (i.e., the structure except for the main body, the lid, and a push stick) of juicer 1.

As shown in FIG. 1 through FIG. 3, juicer 1 has case 2, attachment 3 disposed inside case 2, screw 4 disposed inside attachment 3, lid 5 disposed on case 2, and main body 10 on which case 2 is mounted. Attachment 3 is an exchangeable member attached to juicer 1 for crushing fruits, for example.

Case 2, which is made of transparent plastics, has a shape of an open-top cylinder. Case 2 has first discharge port 21 and pomace-discharge port 23 in the lower section of the outer periphery. Juice comes out of first discharge port 21, while pomace of food comes out of pomace-discharge port 23. Discharge port 21 and pomace-discharge port 23 have open communication with the inner space of case 2. Each of discharge ports 21 and 23 has a tubular shape that protrudes from the outer periphery surface of case 2 toward outside.

Lid 5 is removably attached on the open-top section of case 2. Lid 5 has food inlet 6 of a tubular shape that extends upward. When putting food into food inlet 6, the user pushes it down by inserting push stick 7 into food inlet 6.

Attachment 3 contains drum member 8 and rotary brush 9 disposed around drum member 8. Drum member 8 has mesh section 8a on the periphery surface so that juice can pass therethrough but pomace of food cannot. Screw 4 is disposed inside drum member 8 so that the outer surface of screw 4 comes close to the inner periphery surface of mesh section 8a. Under the condition where drum member 8 is inserted in case 2, drum member 8 engages with case 2 and they work as an integrated structure with respect to at least the rotating direction of screw 4.

When the food is crushed between the outer surface of screw 4 and the inner periphery surface of drum member 8, the juice passes through mesh section 8a and comes into the space between drum member 8 and case 2. The pomace of the processed food is blocked by mesh section 8a and therefore kept inside drum member 8.

First discharge port 21 of case 2 has open communication with the space between the inner periphery surface of case 2 and the outer periphery surface of drum member 8, while pomace-discharge port 23 has open communication with the inner space of drum member 8. On the outer periphery surface of drum member 8, a plurality of annular ribs 8b is disposed for increase in strength.

On the inner periphery surface of drum member 8, a plurality of vertical ribs 8c is disposed so as not to rotate the food together with screw 4. As necessary, drum member 8 may contain a supporting cutter as an aid of crushing food.

Rotary brush 9 is disposed between the outer periphery surface of drum member 8 and the inner periphery surface of case 2. Rotary brush 9 rotates with respect to drum member 8 and removes pomace of crushed food attached to mesh section 8a.

Main body 10 has mount section 11 for mounting case 2 thereon on the upper section. Main body 10 has a driver section (not shown) and rotary drive shaft 12. The driver section drives screw 4 with rotation. Rotary driver shaft 12, which is connected to the driver section, protrudes upward from the center of mount section 11.

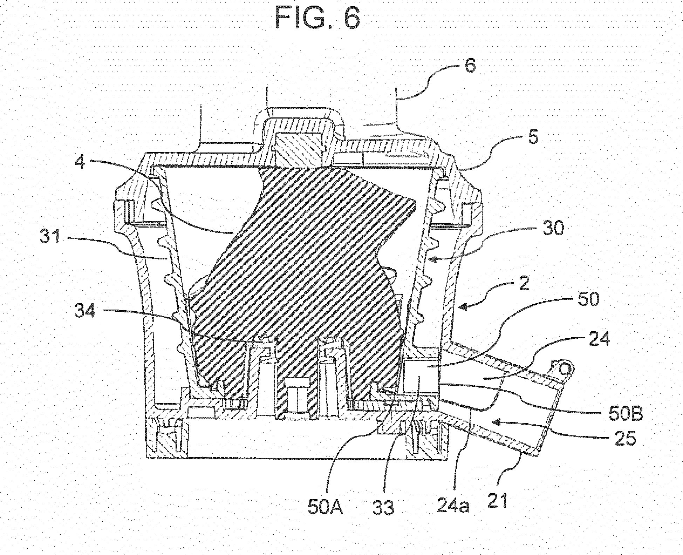

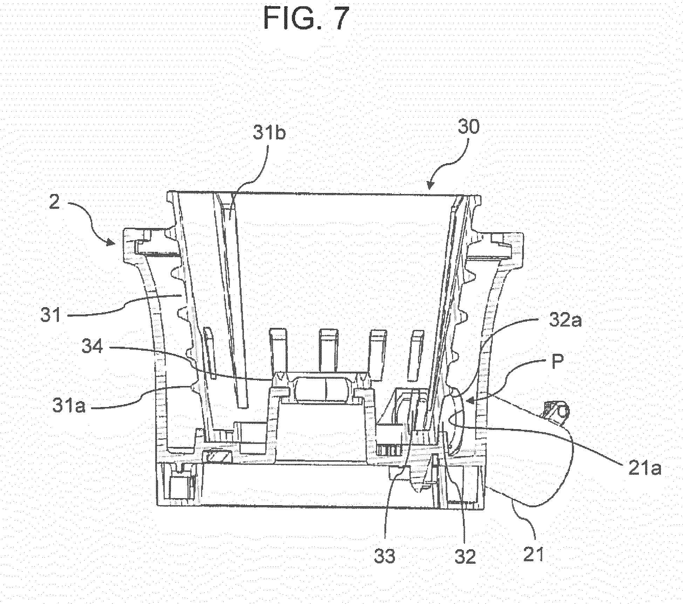

When case 2 is mounted on mount section 11, rotary drive shaft 12 passes through the bottom of case 2 and removably connects to screw 4 disposed inside of case 2. Under the connection between rotary drive shaft 12 and screw 4, the driver section drives screw 4 with rotation via rotary drive shaft 12. To prevent leakage of liquid, seal member 34 (see FIG. 6 and FIG. 7) is disposed on the part at which rotary drive shaft 12 passes through the bottom of case 2.

Screw 4 is substantially formed into a cylinder. On the outer surface of screw 4, helical section 4a for crushing food is disposed adjacent to drum member 8. As described above, the lower section of screw 4 is connected to rotary drive shaft 12 of main body 10. In the upper section of screw 4, rotary shaft 4b of screw 4 protrudes upward. Rotary shaft 4b is rotationally engaged to the lower section of lid 5 attached to case 2.

The description below is on how to make juice from fruits or other foodstuffs with use of juicer 1 on which such structured attachment 3 is attached.

First, the user sets case 2, rotary brush 9, drum member 8, and screw 4 on mount section 11 of main body 10 and attaches lid 5 on case 2. Next, putting food such as fruits into inlet 6, the user inserts push stick 7 in inlet 6 to push down the food into case 2.

When the juicer is turned on, the driver section of main body 10 drives screw 4 with rotation, by which the food is crushed between the outer surface of screw 4 and the inner periphery surface of drum member 8. The juice passes through mesh section 8a and flows into the space between case 2 and drum member 8. The juice comes outside through first discharge port 21 of case 2.

On the other hand, the pomace of the food is blocked by mesh section 8a and accumulated on the bottom of drum member 8. After that, the pomace is discharged-via an opening (not shown) formed on the bottom of drum member 8-from pomace-discharge port 23 of case 2 to the outside.

In response to rotation of screw 4, rotary brush 9 is driven so as to rotate, for example, in the direction opposite to the rotation of screw 4. Rotary brush 9 removes pomace of the food attached to mesh section 8a of drum member 8. The juice is thus obtained by juicer 1 on which attachment 3 is mounted.

Next, attachment 30 will be described. Instead of attachment 3, attachment 30 can be mounted on juicer 1.

Attachment 30 is an exchangeable member for processing the frozen food. With use of attachment 30, juicer 1 makes dessert of sherbet or ice cream by crushing frozen fruits or other frozen food. With attachment 30 mounted on mount section 11 of main body 10, the frozen food is crushed by juicer 1.

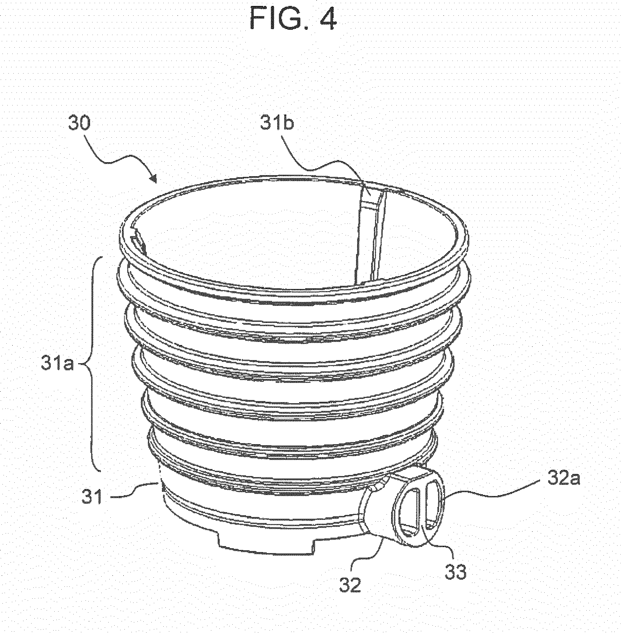

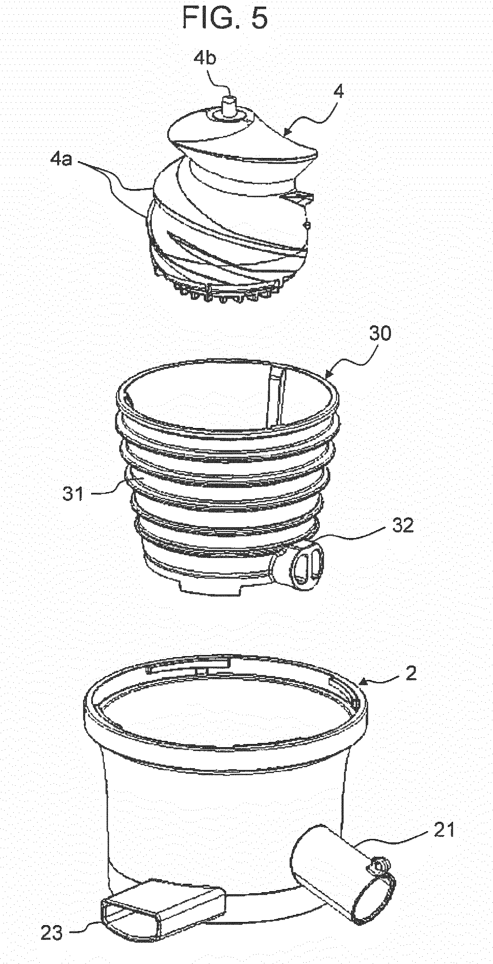

FIG. 4 is a perspective view showing the appearance of attachment 30. FIG. 5 is an exploded perspective view showing the relation of attachment 30, case 2, and screw 4. FIG. 6 is a vertical section view of case 2 with attachment 30 disposed therein.

As shown in FIG. 4, attachment 30 is an open-top container of a cylindrical shape. For example, it is made of transparent plastic. As shown in FIG. 5 and FIG. 6, attachment 30 is disposed in case 2, and screw 4 is disposed in attachment 30.

Attachment 30 has drum section 31 and second discharge port 32. The frozen food is crushed between the cylindrical inner surface of drum section 31 and the outer surface of screw 4. Second discharge port 32 is connected to the inlet of first discharge port 21 of case 2 so as to lead the crushed and fluidized food to first discharge port 21. Second discharge port 32 of a cylindrical shape protrudes outward from the outer surface of drum section 31.

The outer periphery surface of drum section 31 has a plurality of annular ribs 31a for enhancing the strength of the structure. On the other hand, the inner periphery surface of drum section 31 has a plurality of vertical ribs 31b for preventing the frozen food from rotating together with screw 4. Screw 4 is disposed in attachment 30 in such a way that the outer surface of screw 4 comes close to the inner surface of drum section 31.

When attachment 30 is inserted in case 2, it engages with case 2 and the two components work as an integrated structure at least with respect to the rotating direction of screw 4.

Hereinafter, the relationship between second discharge port 32 of attachment 30 and first discharge port 21 of case 2 will be described with reference to FIG. 7. FIG. 7 is a vertical section view of case 2 with attachment 30 disposed therein.

In juicer1, first rib 24 is disposed in first discharge port 21 of case 2 (see FIG. 6) so as to prevent finger insertion accidents. First rib 24, which is a plate-like member, downwardly protrudes from the upper section of the inner periphery surface of cylindrical first discharge port 21. First rib 24 substantially works as a partition of the flow path in first discharge port 21.

Space 25 is formed between lower edge 24a of first rib 24 and a lower section of the inner periphery surface of first discharge port 21. Having space 25 allows first rib 24 not to hamper the flow of processed food along the lower section of the inner periphery surface of first discharge port 21.

First rib 24 is disposed in first discharge port 21 so as to extend to the halfway of the flow path between the inlet (on the side of the inner periphery surface of case 2) of first discharge port 21 and the outlet (on the side away from case 2) of first discharge port 21 (see FIG. 6). Employing first rib 24 with a certain length along the flow path of first discharge port 21 enhances protection of finger insertion accidents.

As shown in FIG. 4, FIG. 6, and FIG. 7, in second discharge port 32 of attachment 30, second rib 33 is disposed so as to meet with first rib 24 of case 2. Specifically, second rib 33 is a plate-like member that extends not only from the upper side to the lower side of the inner periphery surface of discharge path 35 but also from inlet 50A to outlet 50B.

Second rib 33 divides the inside of second discharge port 32 into two, forming discharge path 50. In second discharge port 32, discharge path 50 extends from inlet 50A to outlet 50B.

The aforementioned expression "second rib 33 is disposed so as to meet with first rib 24" means the following positional relationship between the two ribs. When first discharge port 21 and second discharge port 32 are seen along the flow direction, first rib 24 overlaps with second rib 33 and the two ribs are substantially the same in size and shape.

As shown in FIG. 7, in the state where attachment 30 is disposed in case 2, outlet edge 32a of second discharge port 32 of attachment 30 meets with inlet edge 21a of first discharge port 21 of case 2.

That is, outlet edge 32a of second discharge port 32 is connected with inlet edge 21a of first discharge port 21 (at connected part P). Under the connected state, second rib 33 in second discharge port 32 substantially overlaps with first rib 24 in first discharge port 21.

Inlet edge 21a of first discharge port 21 of case 2 is formed along the cylindrical inner periphery surface of case 2. When case 2 is seen from above, inlet edge 21a has a concave shape along the inner periphery surface of case 2. Outlet edge 32a of second discharge port 32 is formed on attachment 30 so as to fit with the shape of inlet edge 21a of first discharge port 21; when attachment 30 is seen from above, outlet edge 32a of second discharge port 32 has a convex shape protruding outwardly.

Description to be given hereinafter is on a method for making dessert of sherbet or ice cream, such as 'Yonanas' (as a registered mark) made of frozen fruits and other foodstuffs, by using juicer 1 on which attachment 30 is mounted.

First, the user sets case 2, attachment 30, and screw 4 on mount section 11 of main body 10 and attaches lid 5 on case 2. Next, putting the frozen food such as frozen fruits into inlet 6, the user pushes it down with push stick 7 so that the food is squeezed between screw 4 and attachment 30 in case 2.

Through the operation, the frozen food is crushed between the outer surface of screw 4 rotationally driven by the driver section of main body 10 and the inner periphery surface of drum section 31 of attachment 30. Case 2 and attachment 30 are made of transparent plastics. This allows the food-crushing process to be seen by the user.

In the food-crushing process, plastic-made attachment 30 is subjected to a large pressure due to the hardness of the frozen food.

However, a plurality of annular ribs 31a formed on the outer periphery surface of drum section 31 protects attachment 30 from deformation. The crushed and fluidized food is carried, via second discharge port 32 of attachment 30, to first discharge port 21 of case 2. The fluidized food comes out of first discharge port 21 of case 2. A dessert of sherbet or ice cream is thus produced.

Discharge path 50 is formed in a way that the cross-section area thereof is the same in size between inlet 50A and outlet 50B or it has a slight increase from inlet 50A toward outlet 50B. Through such structured discharge path 50, the crushed and fluidized food comes out with the shape remained as it is.

### SECOND EXEMPLARY EMBODIMENT

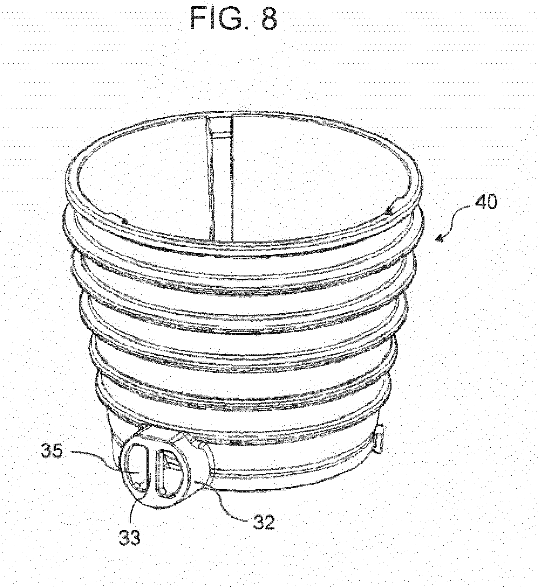

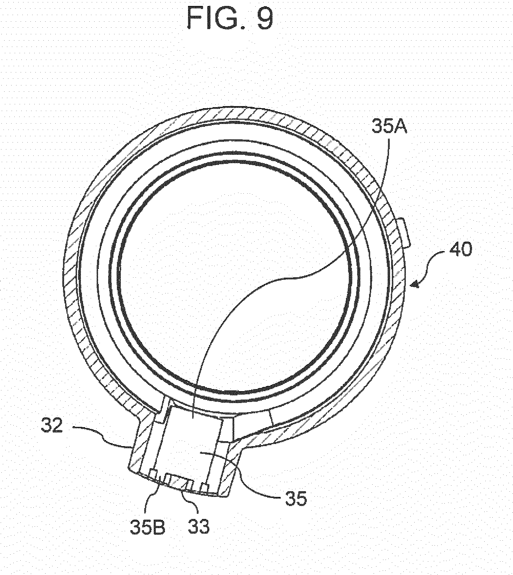

Hereinafter, the structure of the second exemplary embodiment of the present disclosure will be described with reference to FIG. 8 and FIG. 9. FIG. 8 is a perspective view showing the appearance of attachment 40 for processing the frozen food of the exemplary embodiment. FIG. 9 is a horizontal section view of attachment 40.

As shown in FIG. 8 and FIG. 9, attachment 40 has second discharge port 32 that is connected to first discharge port 21 of case 2 so as to lead the crushed and fluidized food to first discharge port 21. Second discharge port 32 has discharge path 35 through which fluidized food moves. Discharge path 35 has inlet 35A and outlet 35B.

Second rib 33 is disposed at outlet 35B-more precisely, at outlet 35B only-of discharge path 35. Second rib 33, which is a stick-like member, extends from the upper section to the lower section of the inner periphery surface of discharge path 35. Second rib 33 partitions discharge path 35 in the periphery of its outlet into two flow paths on the left and the right sides.

That is, the cross-section area of discharge path 35 measures smaller at outlet 35B than at inlet 35A. In such structured discharge path 35, second rib 33 works as a resistance against the flow of the crushed and fluidized food, by which a convective flow is generated. This provides the crushed food with further kneading and compression, resulting in decrease in air quantity contained in the food. Attachment 40 of the embodiment allows the fluidized dessert processed from the frozen food to have textures different from those produced by attachment 30.

The description hereinafter is on the reason why the textures are affected by the magnitude of resistance occurred in the discharge path. According to attachment 30 of the first embodiment, small resistance at the ribs is hard to generate a convective flow; therefore, the food is unlikely to have kneading and compression in the discharge path. As a result, the crushed and fluidized food comes out of the discharge path while remaining the state processed between the outer surface of screw 4 and the inner periphery surface of drum section 31.

The frozen food is crushed between screw 4 and the inner periphery surface of drum section 31 and intermittently carried to the discharge path. The process changes the state of the food so that air is easily contained therein. Containing a large amount of air in the fluidized food means that the fluidized food has a large contact area with air. Such processed food offers the user with a texture of melting in an instant on the tongue.

Similarly, containing a large amount of air in the fluidized food means that the specific gravity of the fluidized food becomes small. This offers the processed food with airy texture.

In contrast, according to attachment 40 of the second embodiment, the ribs have a large resistance against the flow, which generates a convective flow. Due to the convective flow, the fluidized food is further kneaded and compressed, by which the air contained in the food escapes therefrom. Decreasing air quantity contained in the food also decreases the contact area between the food and air, increasing the specific gravity of the food. Such processed food offers the user with a cool feeling because the food moderately melts on the tongue. Besides, the processed food having undergone kneading and compression by a convective flow offers the user with a smooth texture.

When second rib 33-which meets with first rib 24 in first inlet 21-is disposed on the outlet side of second discharge port 32, the fluidized food is smoothly carried from second discharge port 32 to first discharge port 21 of case 2. The structure suppresses the fluidized food from leakage into case 2 from a gap in connected part P between first discharge port 21 and second discharge port 32.

As described above, a plurality of attachments having flow paths of different shapes is prepared for case 2, the user can enjoy various textures even from the same food or can obtain a preferable texture so as to be suitable for each food.

### THIRD EXEMPLARY EMBODIMENT

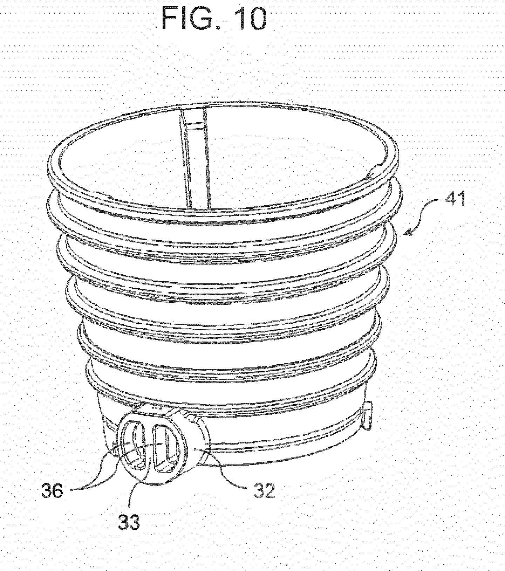

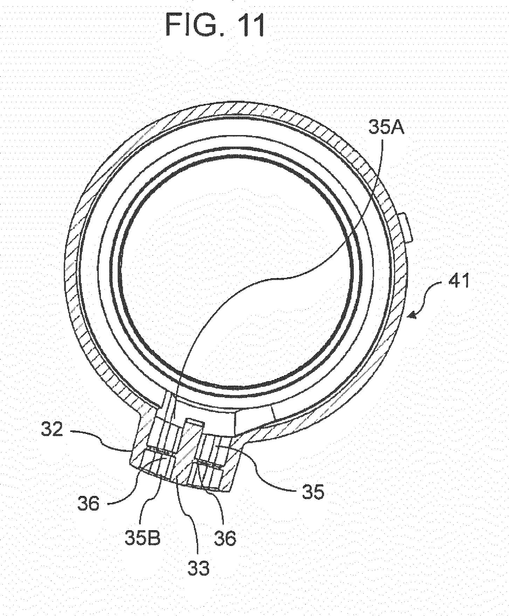

Hereinafter, the structure of the third exemplary embodiment of the present disclosure will be described with reference to FIG. 10 and FIG. 11. FIG. 10 is a perspective view showing the appearance of attachment 41 of the embodiment. FIG. 11 is a horizontal section view of attachment 41 of the embodiment.

As shown in FIG. 10 and FIG. 11, attachment 41 has second discharge port 32 that is connected to first discharge port 21 of case 2 so as to lead the crushed and fluidized food to first discharge port 21. Second discharge port 32 has discharge path 35 through which fluidized food flows. Discharge path 35 has inlet 35A and outlet 35B.

Constriction ribs 36 are disposed so as to protrude from all the inner periphery surface of a part of discharge path 35. Constriction ribs 36 are disposed at a position along the flow direction between inlet 35A and outlet 35B of discharge path 35.

In second discharge port 32, second rib 33 is disposed so as to meet with first rib 24 of case 2. Constriction ribs 36 are also disposed on second rib 33. The part having constriction ribs 36 has a cross-section area different from those at inlet 35A and at outlet 35B.

That is, attachment 41 has discharge path 35 whose cross-section area is smaller at a part in the discharge path than at inlet 35A and outlet 35B. Like the structures in the previously described embodiments, the structure of the embodiment provides the fluidized food with variety of textures.

### FOURTH EXEMPLARY EMBODIMENT

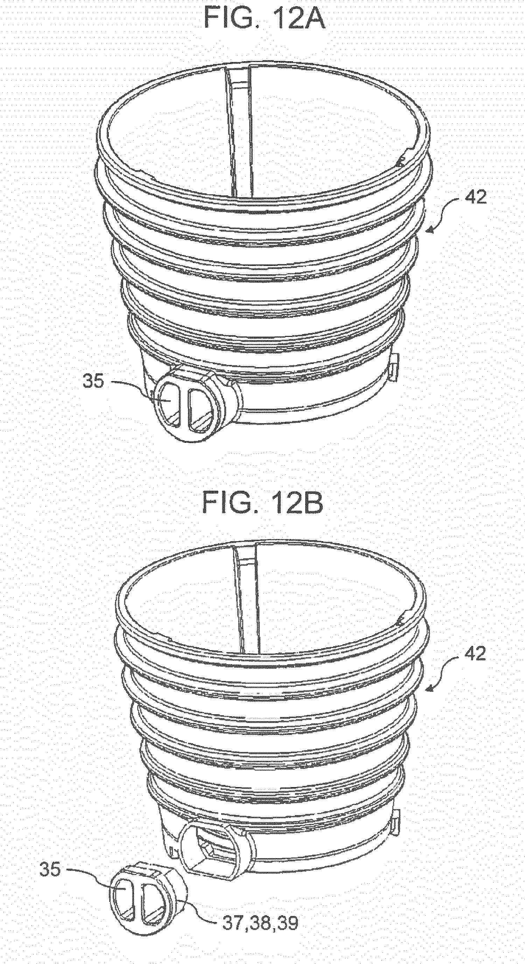

Hereinafter, the structure of the fourth exemplary embodiment of the present disclosure will be described with reference to FIG. 12A through FIG. 16. FIG. 12A is a perspective view showing the appearance of attachment 42 for processing the frozen food of the fourth embodiment. FIG. 12B is an exploded perspective view of attachment 42.

As shown in FIG. 12A and FIG. 12B, attachment 42 has second discharge port 32 that is connected to the inlet of first discharge port 21 of case 2 so as to lead the crushed and fluidized food to first discharge port 21. According to the structure of the embodiment, discharge path 35 is formed separate from attachment 42 and attached to second discharge port 32 so as to be removable therefrom. Discharge path 35 can be formed of any one of passage members 37 through 39 below.

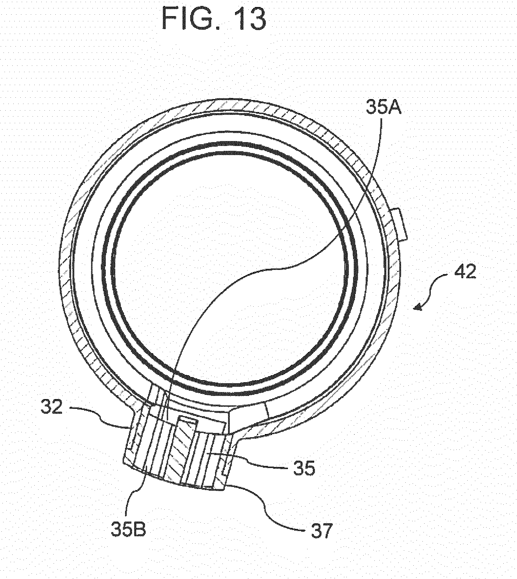

FIG. 13 is a horizontal section view of attachment 42 and passage member 37. As shown in FIG. 13, passage member 37 is formed in a way that the cross-section area thereof is the same in size between inlet 35A and outlet 35B or it has a slight increase from inlet 35A toward outlet 35B.

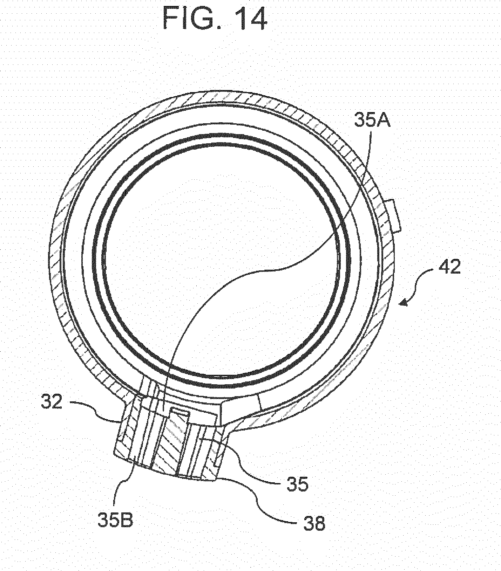

FIG. 14 is a horizontal section view of attachment 42 and passage member 38. As shown in FIG. 14, passage member 38 is formed in a way that the cross-section area thereof decreases linearly from inlet 35A toward outlet 35B. Such structured passage member gives compression on the food as it comes close to the outlet, so that the user enjoys different textures.

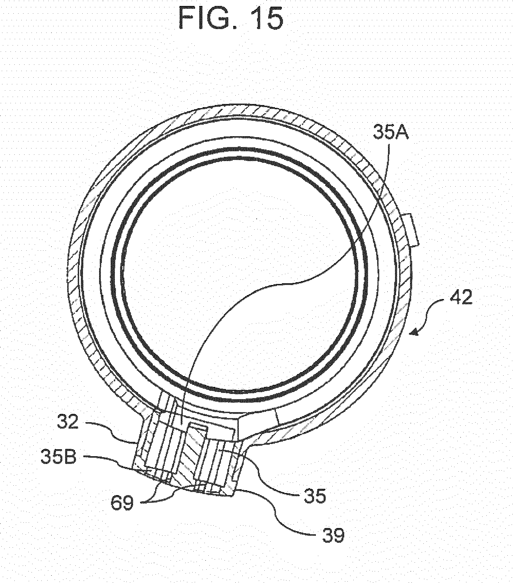

FIG. 15 is a horizontal section view of attachment 42 and passage member 39. As shown in FIG. 15, passage member 39 has rib 69 in a part close to outlet 35B so as to protrude from all the inner periphery surface of the part; accordingly, the part close to outlet 35 has a cross-section area smaller than other parts of passage member 39. According to the structure of the embodiment, rib 69 causes a convective flow, by which the food undergoes compression. Coming out of the passage member, the food provides a variety of textures.

Passage members 37 through 39 should be prepared in advance so as to be exchanged to provide different textures of the fluidized food.

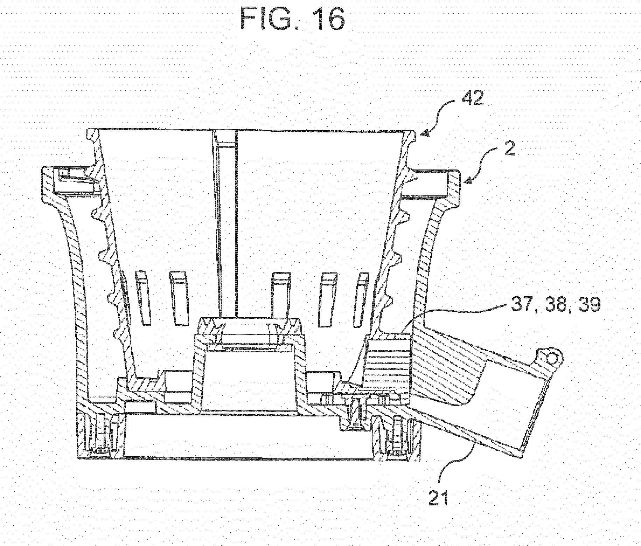

FIG. 16 is a vertical section view of case 2 with attachment 42 mounted. As shown in FIG. 16, when attachment 42 is set in case 2, passage member 37 (38, 39) is sandwiched between case 2 and attachment 42 and is kept in place without an additional locking member.

### FIFTH EXEMPLARY EMBODIMENT

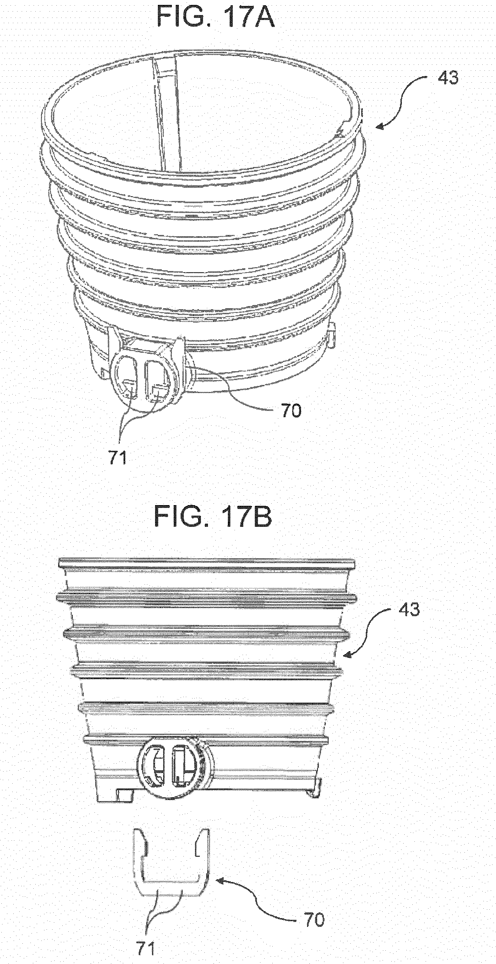

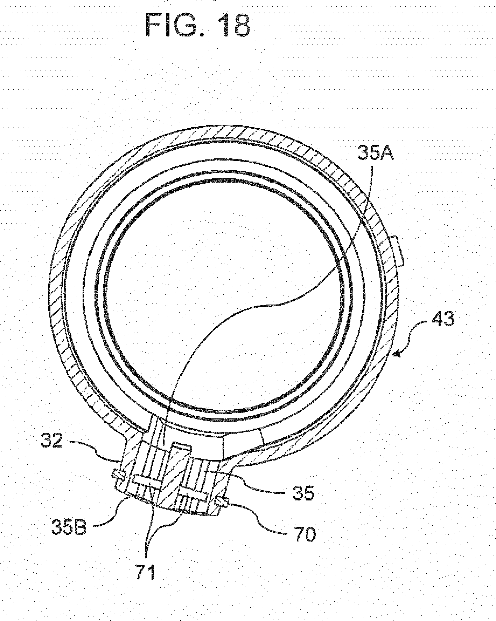

Hereinafter, the structure of the fifth exemplary embodiment of the present disclosure will be described with reference to FIG. 17A through FIG. 18. FIG. 17A is a perspective view showing the appearance of attachment 43 for processing the frozen food of the embodiment. FIG. 17B is an exploded perspective view of attachment 43 and FIG. 18 is a horizontal section view of the attachment.

As shown in FIG. 17A, FIG. 17B, and FIG. 18, closer 70 is attached to a position so as to be removable in discharge path 35 of attachment 43. At the position with closer 70 attached, the discharge path is partially obstructed by part 71 of closer 70, that is, the cross-section area at the position with closer 70 attached becomes smaller than those at other parts of discharge path 35. According to the structure of the embodiment, closer 70 causes a convective flow in discharge path 35, by which the food undergoes compression. Coming out of the discharge port, the food provides a variety of textures.

### SIXTH EXEMPLARY EMBODIMENT

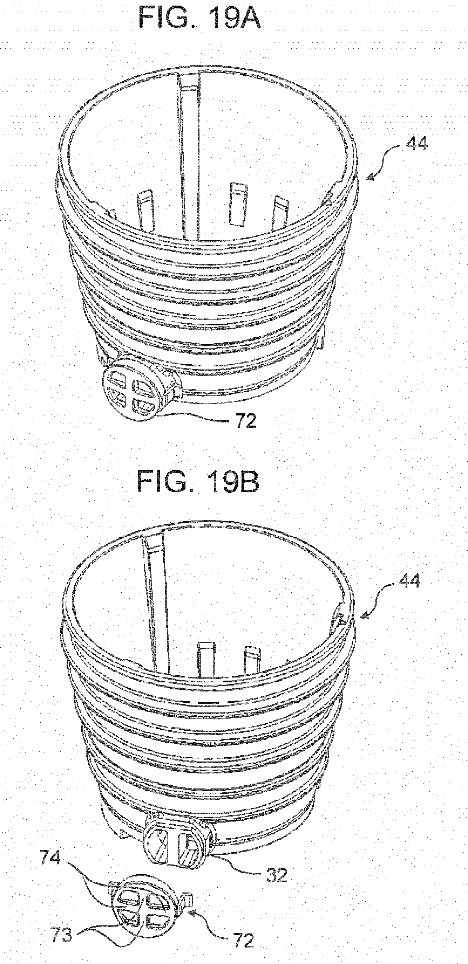

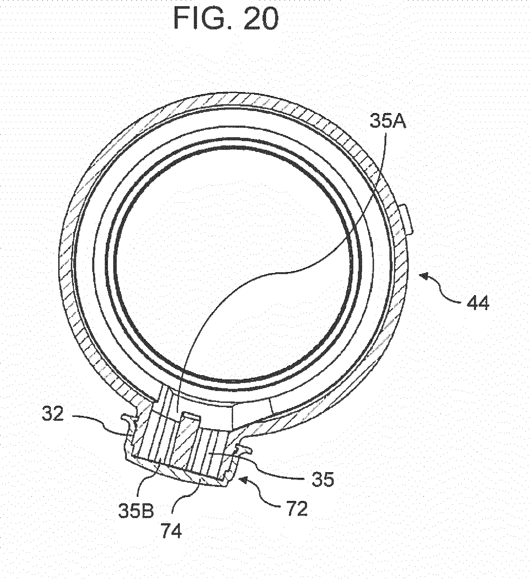

Hereinafter, the structure of the sixth exemplary embodiment of the present disclosure will be described with reference to FIG. 19A through FIG. 20. FIG. 19A is a perspective view of attachment 44 for processing the frozen food of the exemplary embodiment. FIG. 19B is an exploded perspective view of attachment 44 and FIG. 20 is a horizontal section view of the attachment.

As shown in FIG. 19A through FIG. 20, nozzle 72, which is a removable closer, is attached to outlet 35B of attachment 44. Nozzle 72 has rib 73 and rib 74. Rib 73 faces first rib 24 (see FIG. 6) disposed at the inlet of first discharge port 21 of case 2. Attaching nozzle 72 to outlet 35B contributes to decrease in cross-section area at outlet 35B of discharge path 35. According to the structure of the embodiment, nozzle 72 causes a convective flow in discharge path 35, by which the food undergoes compression. Coming out of the discharge port, the food provides a variety of textures.

### SEVENTH EXEMPLARY EMBODIMENT

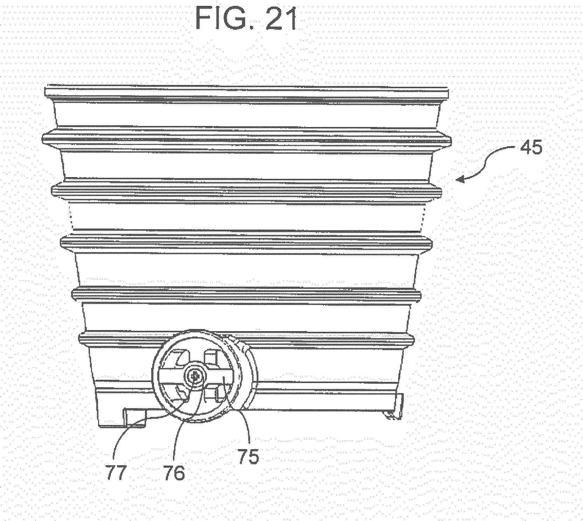

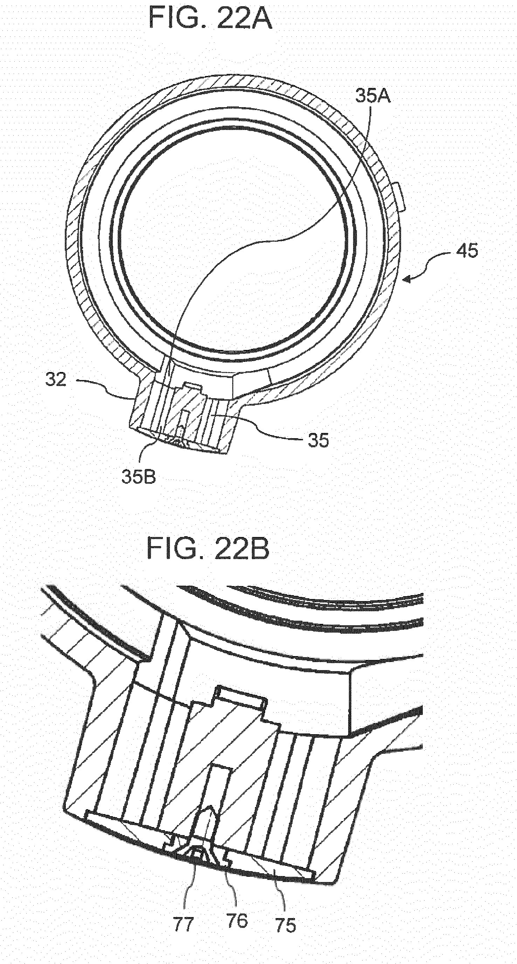

Hereinafter, the structure of the seventh exemplary embodiment of the present disclosure will be described with reference to FIG. 21 through FIG. 24. FIG. 21 is a perspective view showing the appearance of attachment 45 for processing the frozen food of the exemplary embodiment. FIG. 22A is a horizontal section view of attachment 45 and FIG. 22B is an enlarged section view of the attachment.

According to the structure of the embodiment, as shown in FIG.21, FIG. 22A, and FIG. 22B, fan 75 as a closer is attached to outlet 35B with screw 77, via fixed bush 76, so as to be rotatable and removable.

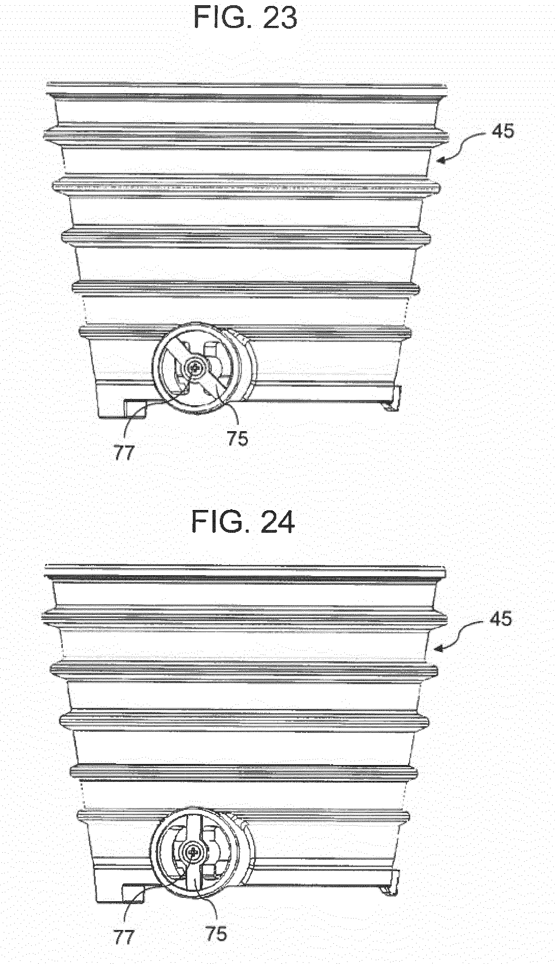

FIG. 23 is a perspective view of attachment 45 where fan 75 has been rotated 45° clockwise from the state shown in FIG. 21. FIG. 24 is a perspective view of attachment 45 where fan 75 has been rotated 90° clockwise from the state shown in FIG. 21. Under the state shown in FIG. 24, fan 75 overlaps with first rib 24 disposed at the inlet of fist discharge port 21 of case 2.

As shown in FIG. 23 and FIG. 24, fan 75 as a closer is rotatably attached to outlet 35B of discharge path 35. Rotation of fan 75 alters the cross-section area at the outlet of discharge path 35. According to the structure of the embodiment, employing attachment 45 alone-without exchanging parts-allows the discharge path to have a different cross-section area. That is, change in the amount of the cross-section area of the discharge path causes changes in convective flow and compression on the food. As a result, the user enjoys dessert with various types of textures.

Further, such a closer may contain variations in structure. For example, when a closer having fine mesh is disposed at outlet 35B of discharge path 35, noodle-like dessert is obtained. Similarly, when a closer having a star-shaped opening is attached to the outlet, a dessert with a star-like cross section is obtained. The user enjoys the dessert not only by tasted but also by seen. Even if the food contains something the user dislikes, such prepared dessert may be acceptable.

The attachments of the present disclosure are applicable to a juicer that makes dessert of sherbet or ice cream by crushing the frozen food.

## Claims

1. A juicer (1) comprising:
a screw (4) to be driven with rotation;
an attachment (30, 40, 41, 42, 43, 44, 45), with the screw (4) disposed therein, for crushing frozen food between an inner periphery surface of the attachment (30, 40, 41, 42, 43, 44, 45) and the screw (4);
a case (2) that has a first discharge port (21) for discharging crushed and fluidized food;
a lid (5) that has an inlet and is attached to a top portion of the case (2); and
a main body (10) that has a case-mount section for mounting the case (2) on an upper side and drives the screw (4) with rotation, the juicer is **characterized in that**, the attachment (30, 40, 41, 42, 43, 44, 45) including:
a drum section (31) for crushing the frozen food between an inner periphery surface of the drum section (31) and the screw (4); and
a second discharge port (32) that is connected to an inlet of the first discharge port (21) of the case (2) so as to lead the crushed and fluidized food to the first discharge port (21),
wherein, the second discharge port (32) has a discharge path (35) in which a part at least between an inlet (35A) and an outlet (35B) has a cross-section area different from cross-section areas of other parts.

2. The juicer (1) of claim 1, wherein the outlet (35B) of the discharge path (35) has a cross-section area smaller than a cross section area of the inlet (35A) of the discharge path (35).

3. The juicer (1) of claim 1, wherein the discharge path (35) of the attachment (41) has a part whose cross-section area is smaller than a cross-section area of each of the inlet (35A) and the outlet (35B) of the discharge path (35).

4. The juicer (1) of claim 1, wherein the discharge path (35) is removably disposed on the attachment (42).

5. The juicer (1) of claim 1, wherein a part of the discharge path (35) of the attachment (43, 44, 45) has a removable closer (70, 75).

6. The juicer (1) of claim 5, wherein the closer (75) is rotatably attached to the discharge path (35) so as to change a cross-section area of the discharge path (35).

## Patentansprüche

1. Entsafter (1), der umfasst:
eine Schnecke (4), die mit Drehung angetrieben wird;
einen Einsatz (30, 40, 41, 42, 43, 44, 45), in dem die Schnecke (4) angeordnet ist, um gefrorene Lebensmittel zwischen einer Innenumfangsfläche des Einsatzes (30, 40, 41, 42, 43, 44, 45) und der Schnecke (4) zu zerkleinern;
eine Verkleidung (2), die eine erste Ableitöffnung (21) zum Ableiten von verkleinertem und verflüssigtem Lebensmittel aufweist;
eine Abdeckung (5), die einen Einlass aufweist und an einem oberen Abschnitt der Verkleidung (2) angebracht wird; sowie
ein Hauptgehäuse (10), das einen Verkleidungs-Anbringungsabschnitt zum Anbringen der Verkleidung (2) an einer Oberseite aufweist und die Schnecke (4) mit Drehung antreibt,
wobei der Entsafter **dadurch gekennzeichnet ist, dass** der Einsatz (30, 40, 41, 42, 43, 44, 45) enthält:
einen Trommel-Abschnitt (31) zum Zerkleinern des gefrorenen Lebensmittels zwischen einer Innenumfangsfläche des Trommel-Abschnitts (31) und der Schnecke (4); sowie
eine zweite Ableitöffnung (32), die mit einem Einlass der ersten Ableitöffnung (21) der Verkleidung (2) verbunden ist, um das verkleinerte und verflüssigte Lebensmittel zu der ersten Ableitöffnung (21) zu leiten,
wobei die zweite Ableitöffnung (32) einen Ableitweg (35) aufweist, in dem ein Teil wenigstens zwischen einem Einlass (35A) und einem Auslass (35B) eine Querschnittsfläche hat, die sich von Querschnittsflächen anderer Teile unterscheidet.

2. Entsafter (1) nach Anspruch 1, wobei der Auslass (35B) des Ableitweges (35) eine Querschnittsfläche hat, die kleiner ist als eine Querschnittsfläche des Einlasses (35A) des Ableitweges (35).

3. Entsafter (1) nach Anspruch 1, wobei der Ableitweg (35) des Einsatzes (41) einen Teil aufweist, dessen Querschnittsfläche kleiner ist als eine jeweilige Querschnittsfläche des Einlasses (35A) und des Auslasses (35B) des Ableitweges (35).

4. Entsafter (1) nach Anspruch 1, wobei der Ableitweg (35) abnehmbar an dem Einsatz (42) angeordnet ist.

5. Entsafter (1) nach Anspruch 1, wobei ein Teil des Ableitweges (35) des Einsatzes (43, 44, 45) einen abnehmbaren Verschluss (70, 75) aufweist.

6. Entsafter (1) nach Anspruch 5, wobei der Verschluss (75) drehbar an dem Ableitweg (35) angebracht ist und eine Querschnittsfläche des Ableitweges (35) ändert.

## Revendications

1. Extracteur de jus (1) comprenant :
une vis (4) destinée à être entraînée en rotation ;
un accessoire (30, 40, 41, 42, 43, 44, 45) dans lequel est disposée la vis (4), permettant de broyer un aliment congelé entre une surface périphérique intérieure de l'accessoire (30, 40, 41, 42, 43, 44, 45) et la vis (4) ;
un récipient (2) qui est pourvu d'un premier orifice de décharge (21) pour décharger l'aliment broyé et rendu fluide ;
un couvercle (5) qui est pourvu d'une entrée et est fixé à une partie supérieure du récipient (2) ; et
un corps principal (10) qui comporte une section de montage de récipient permettant de monter le récipient (2) sur un côté supérieur et qui entraîne la vis (4) en rotation,
l'extracteur de jus étant **caractérisé en ce que** l'accessoire (30, 40, 41, 42, 43, 44, 45) comprend :
une section formant tambour (31) pour broyer l'aliment congelé entre une surface périphérique intérieure de la section formant tambour (31) et la vis (4) ; et
un second orifice de décharge (32) qui est connecté à une entrée du premier orifice de décharge (21) du récipient (2) de manière à conduire l'aliment broyé et rendu fluide vers le premier orifice de décharge (21),
dans lequel le second orifice de décharge (32) comporte un trajet d'écoulement (35) dans lequel une partie située au moins entre une entrée (35A) et une sortie (35B) a une aire de section transversale différente des aires de section transversale des autres parties.

2. Extracteur de jus (1) selon la revendication 1, dans lequel la sortie (35B) du trajet d'écoulement (35) a une aire de section transversale plus petite qu'une aire de section transversale de l'entrée (35A) du trajet d'écoulement (35).

3. Extracteur de jus (1) selon la revendication 1, dans lequel le trajet d'écoulement (35) de l'accessoire (41) comporte une partie dont l'aire de section transversale est plus petite qu'une aire de section transversale respective de l'entrée (35A) et de la sortie (35B) du trajet d'écoulement (35).

4. Extracteur de jus (1) selon la revendication 1, dans lequel le trajet d'écoulement (35) est disposé de manière amovible sur l'accessoire (42).

5. Extracteur de jus (1) selon la revendication 1, dans lequel une partie du trajet d'écoulement (35) de l'accessoire (43, 44, 45) possède un dispositif de fermeture (70, 75) amovible.

6. Extracteur de jus (1) selon la revendication 5, dans lequel le dispositif de fermeture (75) est fixé au trajet d'écoulement (35) de manière rotative de façon à modifier une aire de section transversale du trajet d'écoulement (35).
